# EUROPÄISCHE PATENTSCHRIFT

(11) **EP 0 324 927 B1**
(45) Veröffentlichungstag und Bekanntmachung des Hinweises auf die Patenterteilung: **04.05.1994**
(21) Anmeldenummer: 88119838.6
(22) Anmeldetag: 29.11.1988
(51) Int. Cl.: E06B 3/54

(54) **Befestigung für Isolierglassscheiben einer Aussenwand- oder Dachverglasung**
Attachment for insulating glass panes of an outer wall or roof glazing
Fixation pour vitres isolantes d'un vitrage d'un mur extérieur ou d'une toiture

(30) Priorität: 18.01.1988 DE 3801186
(43) Veröffentlichungstag der Anmeldung: 26.07.1989
(73) Patentinhaber: SCHÜCO International KG, D-33609 Bielefeld (DE)
(72) Erfinder: Tönsmann, Armin, D-4817 Leopoldshöhe (DE); Höcker, Eitel, D-4800 Bielefeld 15 (DE); Janssen, Pieter, D-4800 Bielefeld 15 (DE)
(74) Vertreter: Stracke, Alexander, Dipl.-Ing.

(56) Entgegenhaltungen:
- EP-A- 0 250 989
- DE-A- 3 624 491
- DE-C- 3 439 436
- DE-U- 6 910 884
- DE-U- 8 416 009
- DE-U- 8 714 057
- FR-A- 1 411 236
- GB-A- 2 216 566

## Beschreibung

Die Erfindung bezieht sich auf eine Befestigung für Isolierglasscheiben einer Außenwand oder Dachverglasung, die von einer aus Profilschienen gebildeten Tragkonstruktion gehalten ist, an der die aus in Abstand voneinander angeordneten Scheiben bestehenden Isolierglasscheiben durch Haltemittel formschlüssig festgelegt sind, wobei die Außenscheibe jeder Isolierglasscheibe eine von der jeweiligen seitlichen Randfläche beginnende Ausnehmung aufweist und die einander zugewandten Ausnehmungsflächen benachbarter, eine Fassadenfuge begrenzender Isolierglasscheiben miteinander fluchten und in die Ausnehmung der Isolierglasscheiben Flansche der Haltemittel eingreifen, die in der Ausnehmung in Dichtungsmasse eingebettet sind.

Es ist eine Befestigung dieser Art bekannt (EP 0 250 989 A1), bei der die mechanischen Haltemittel nur Sicherungsmittel darstellen, während die eigentliche Verbindung der Isolierglasscheiben mit der Tragkonstruktion durch eine Klebeleiste erfolgt, die auch eine Versiegelungs- und Dichtungsfunktion ausübt.

Die mechanischen Haltemittel, die lediglich als Scheibensicherung im Versagensfall der innenliegenden Verklebung vorgesehen sind, übernehmen in der Montagephase die volle Funktion der Scheibenhalterung bis die bauseits durchzuführende, innere Scheibenbefestigungsverklebung erfolgt und ausgehärtet ist.

Es ist ferner eine Befestigung für Isolierglasscheiben einer Außenwand- oder Dachverglasung, die von einer aus Profilschienen gebildeten Tragkonstruktion gehalten ist bekannt (DE 34 39 436 C2), an der die aus in Abstand voneinander angeordneten Scheiben bestehenden Isolierglasscheiben durch Haltemittel formschlüssig festgelegt sind. Die Isolierglasscheiben weisen im Randbereich U-förmige, zwischen ihren Glasplatten eingesetzte, nach außen offene Profilschienen auf, in die die Flansche von Haltemitteln eingreifen. Die Fassaden- oder Dachfugen, die von zwei benachbarten Isolierglasscheiben begrenzt werden, werden durch eine die Außenscheiben dieser Isolierglasscheiben verbindende Versiegelungsmasse verschlossen.

Bei beiden bekannten Ausführungen müssen die Versiegelungs- bzw. Klebearbeiten an der Baustelle durchgeführt werden. Die Verklebung der Isolierglasscheiben mit der Tragkonstruktion erfordert eine hohe Sorgfalt, während die Versiegelung zwar keine Haltefunktion für die Scheibeneinheiten bildet, jedoch die Dichtigkeit im Fugenbereich sicherstellen muß.

Der Erfindung liegt die Aufgabe zugrunde, eine Befestigung der eingangs genannten Art so zu gestalten, daß die Außenscheiben der die Außenwand- oder die Dachverglasung bildenden Isolierglasscheiben unter Fortfall von Klebe- und/oder Versiegelungsarbeiten an der Baustelle in den Fassaden- oder Dachfugen formschlüssig festgelegt und gesichert werden.

Diese Aufgabe wird nach der Erfindung dadurch gelöst, daß die Außenscheibe einer jeden Isolierglasscheibe eine umlaufende, von der jeweiligen seitlichen Randfläche beginnende Stufe aufweist und in die Stufe eingreifende Flanschleisten einen oder mehrerer Halteprofile von einer als Dichtungshohlköper ausgebildeten Dichtung umschlossen sind, die die Befestigungsschrauben außen abdeckt und zusammen mit den Flanschleisten den Stufenraum ausfüllt, wobei die Außenfläche der Dichtung und die Außenflächen der Isolierglasscheiben eine gemeinsame Ebene bilden, und daß die Dichtung teilweise einen von Dichtungsmasse freien Falzraum der Isolierverglasung begrenzt.

Durch die als Dichtungshohlkörper ausgebildete Dichtung wird eine Glas-Metall-Berührung im Bereich der Halterung unterbunden.

Da der Falzraum der Isolierverglasung von Dichtungsmasse frei ist, ist eine Falzgrundbelüftung gewährleistet.

Weitere Kennzeichen und Merkmale der Erfindung ergeben sich aus den Unteransprüchen.

In den Zeichnungen sind Ausführungsbeispiele der erfindungsgemäßen Befestigung dargestellt und werden im folgenden beschrieben.

Es zeigen:
- Fig. 1: die Befestigung zweier Isolierglasscheiben einer Außenwand-oder Dachverglasung an einem Pfostenprofile in einer Schnittdarstellung,
- Fig. 2: eine Abwandlungsform zu der Ausführung nach der Fig. 1,
- Fig. 3: die Zuordnung von Sprossenprofilen zu den Pfostenprofilen der Tragkonstruktion und
- Fig. 4: ein weiteres Ausführungsbeispiel im Schnitt, bei dem die Isolierglasscheiben mit einem Rahmen versehen sind.

In den dargestellten Ausführungsbeispielen weisen die Isolierglasscheiben 1 der Außenwand- oder Dachverglasung jeweils eine Innenscheibe 2 und eine Außenscheibe 3 auf. Zwischen der Außenscheibe 3 und der Innenscheibe 2 ist ein Abstandhalteprofil 4 vorgesehen. Die Innenscheibe 2 ist mit der Außenscheibe 3 durch eine Klebeschicht 5 verbunden.

In den dargestellten Ausführungsbeispielen ist die Außenscheibe 3 als Verbundsicherheitsscheibe ausgebildet und besteht aus zwei Glasplatten 6 und 7, die mittels einer durchsichtigen Klebefolie 8 oder mittels einer durchsichtigen Gießharzschicht miteinander verbunden sind. Die äußere Glasplatte 6 ist umlaufend kleiner ausgebildet als die innenliegende Glasplatte 7, so daß die beiden Glasplatten eine umlaufende Stufe 9 bilden, die von der jeweiligen seitlichen Randfläche der Außenscheibe 3 beginnt. Die Randfläche 10 der äußeren Glasplatte 6 bestimmt mit der Dicke der Klebefolie 8 die Höhe der Stufe 9, während die Breite der Stufe dem die äußere Glasplatte überragenden Randbereich der innenliegenden Glasplatte 7 entspricht.

In Abwandlung der beschriebenen Konstruktion der Isolierglasscheiben besteht auch die Möglichkeit, die Außenscheibe 3 als Glasscheibe auszubilden und den umlaufenden Rand mit einer eingeschliffenen oder bei der Scheibenfertigung eingeformten Stufe zu versehen.

In den dargestellten Ausführungsbeispielen überragt die umlaufende Stufe 9 der Außenscheibe 3 den umlaufenden Außenrand der Innenscheibe 2 jeder Isolierglasscheibe 1.

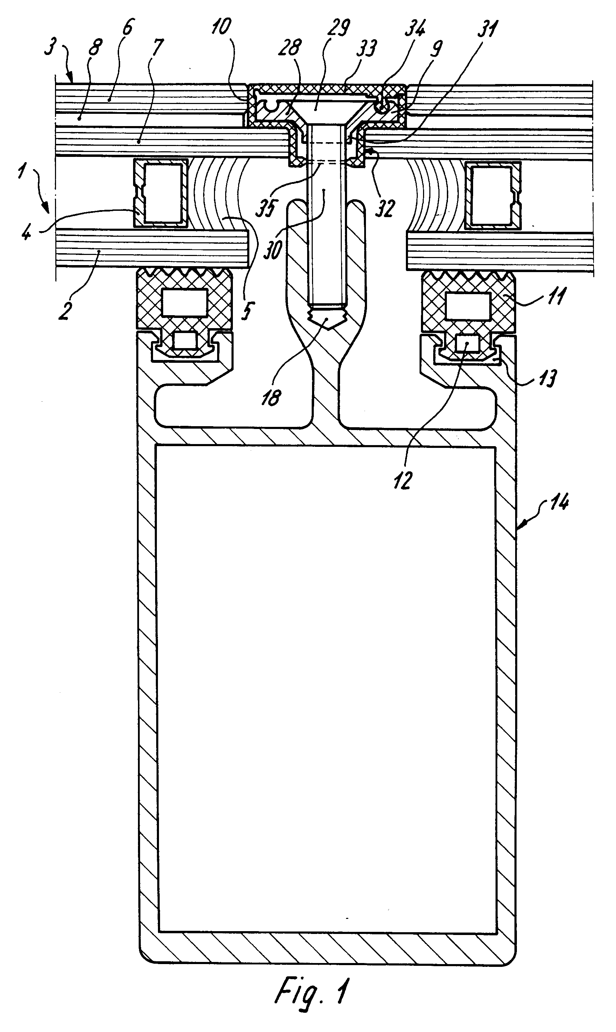

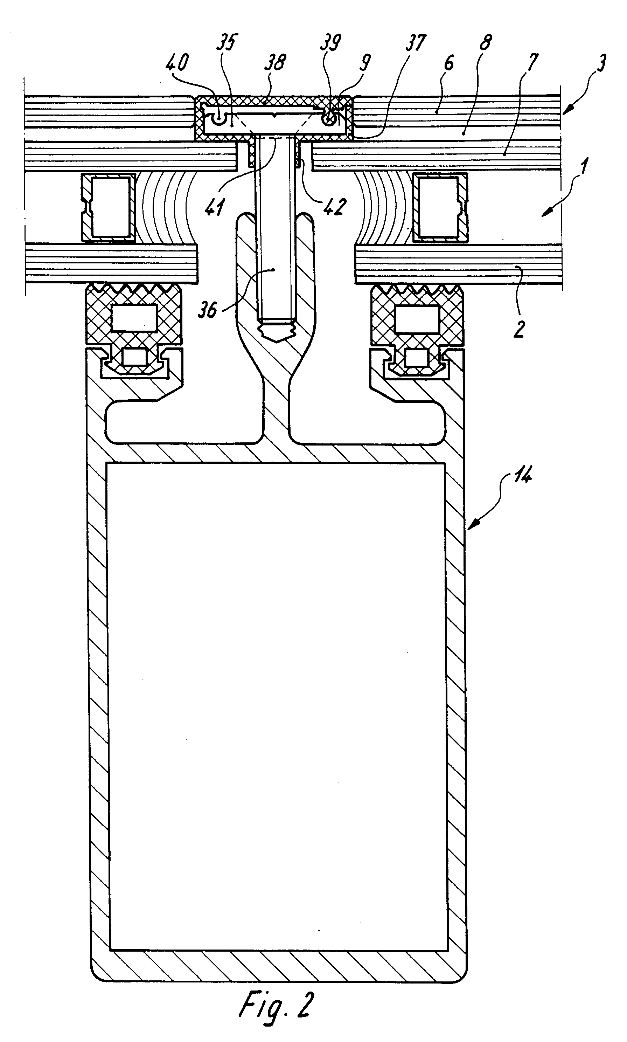

Bei den Ausführungen nach den Fig. 1 und 2 liegen die Isolierglasscheiben 1 auf Dichtungsleisten 11 auf, die mit ihrem Befestigungsfuß 12 in Verankerungsnuten 13 eines Pfostenprofils 14 festgelegt sind.

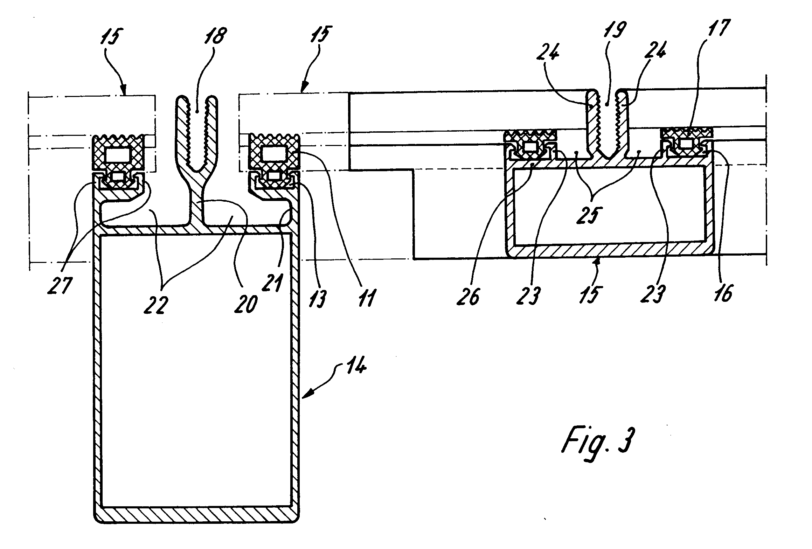

Aus der Fig. 3 ergibt sich, daß die Tragkonstruktion zusätzlich zu den Pfostenprofilen 14 auch Sprossenprofile 15 aufweisen kann, die mit Verankerungsnuten 16 für Dichtungsleisten 17 ausgerüstet sind. Sowohl die Pfostenprofile als auch die Sprossenprofile sind mittig mit Schraubnuten 18,19 zum Einschrauben von Befestigungsschrauben versehen. Von einem Haltesteg 20 der Schraubnut 18 und einem die Verankerungsnut 13 tragenden Wandsteg 21 wird eine Rinne 22 zur Aufnahme von Sickerwasser begrenzt.

Bei den Sprossenprofilen 15 begrenzen der innenliegende Randsteg 23 der Verankerungsnut 26 und die Leisten 24 der Schraubnut 19 ebenfalls eine Rinne 25 zur Aufnahme von Sickerwasser.

In der Fig. 3 ist der Überlappungsbereich zwischen zwei Sprossenprofilen 15 und einem Pfostenprofil 14 in strichpunktierten Linien dargestellt. Die Sprosse wird am vorderen Stirnende unterhalb des Bodens 26 der Verankerungsnuten 16 und der Rinnen 25 rechtwinklig ausgespart und nach der Entfernung der Dichtungsleiste 11 im Sprossenbereich mit ihrem Boden 26 auf die Randstege 27 der Verankerungsnut 13 des Pfostenprofils 14 gesetzt, so daß das von den Rinnen 25 der Sprossen 15 aufgenommene Sickerwasser in die Rinnen 22 der Pfostenprofile 14 fließen kann.

Damit die Dichtungsleisten 11 und 17 der Pfosten- und der Sprossenprofile eine gemeinsame Auflageebene für die Isolierglasscheiben bilden, weisen die Dichtungsleisten 17 eine geringere Bauhöhe auf als die Dichtungsleisten 11 der Pfostenfprofile.

Bei der in der Fig. 1 aufgezeigten Befestigung wurde ein T-förmiges Halteprofil 28 in die benachbarten Stufen 9 zweier Isolierblasscheiben 1 eingelegt, das aus Metall, vorzugsweise aus Aluminium gefertigt ist. Dieses Halteprofil weist eine trapezförmige Nut auf, deren Innenkontur der Außenkontur des Senkkopfes 29 der Befestigungsschrauben 30 entspricht. Der Nutboden 31 ist mit Durchstecklöchern für die Schäfte der Befestigungsschrauben 30 versehen.

Das Halteprofil 28 und auch die Teile der Schraubenschäfte, die sich im Bereich der Außenscheibe 3 befinden, werden von einer Dichtung 32 umschlossen, die einen sich über die gesamte Fuge erstreckenden Deckel 33 aufweist. Dieser Deckel ist an der Unterseite mit mindestens einem Rastvorsprung 34 versehen, der in eine zugeordnete Rastaussparung des Halteprofils 28 eingefedert werden kann.

Die Dichtung 32 erstreckt sich über die gesamte gestufte Stirnfläche der benachbarten Außenscheiben und weist an der der Tragkonstruktion zugewandten Seite einen geschwächten Querschnitt 35 auf. An den jeweiligen Stellen wird dieser geschwächte Querschnitt 35 von dem Schraubenschaft einer Befestigungsschraube durchstoßen, die in der Schraubnut 18 des Pfostenprofils 14 festgelegt wird.

Die Dichtung 32 wird vorzugsweise aus Silikon gefertigt. Sie kann in einer Farbe erstellt werden, die sich deutlich von den Glasscheiben abhebt, so daß mittels dieser Farbe des Deckels 33 ein gestalterischer Effekt erzielbar ist.

Bei der Befestigung nach der Fig. 2 wird ein im Querschnitt rechteckförmig ausgebildetes Halteprofil 25 verwendet, das ebenfalls aus Metall, vorzugsweise aus Aluminium gefertigt wird und mittels Senkkopfschrauben 36 an dem Pfostenprofil 14 festgelegt wird. Das Halteprofil muß mit Senkkopfbohrungen versehen werden. Das Halteprofil 35 und der obere Teil des Schaftes der Befestigungsschrauben 36 wird von einer vorzugsweise aus Silikon gefertigten Dichtung 37 umschlossen, die mit einem Deckel 38 versehen ist, der an seiner Unterseite mindestens einen Rastvorsprung 39 aufweist, der in eine entsprechende Rastaussparung des Halteprofils eingeschnäppt werden kann.

Aus der zeichnerischen Darstellung ergibt sich, daß das Halteprofil an beiden Seiten mit Rastaussparungen 40 versehen werden kann, so daß bei einer entsprechenden Ausrüstung des Deckels mit Rastnocken eine Fixierung des Deckels an beiden seiten des Halteprofils erzielbar ist.

Auch bei dieser Ausführung weist die Dichtung an der Unterseite einen geschwächten Querschnitt 41 auf, der von dem Schraubenschaft durchstoßen werden muß. Die nach unten sich erstreckenden Lappen 42 der Dichtung verhindern, daß es im Bereich der untenliegenden Glasplatte der Außenscheibe zu einer Metallberührung kommen kann.

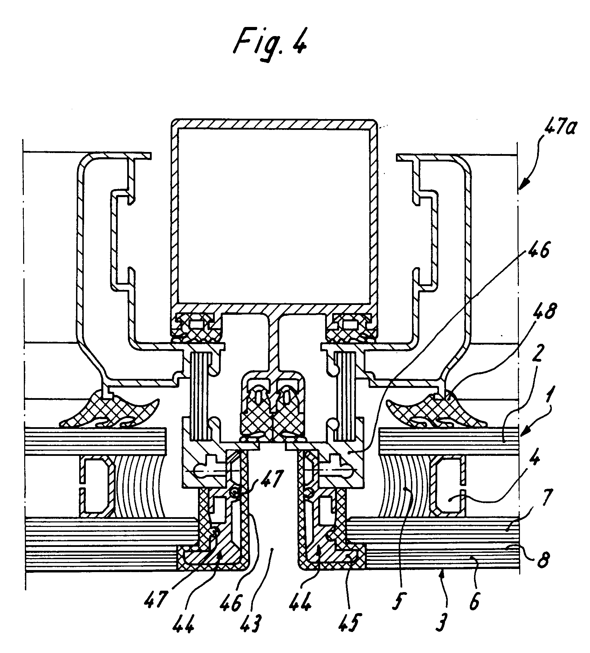

Bei dem Ausführungsbeispiel nach der Fig. 4 sind in jeder Fuge 43 zwei L-förmige Halteprofile 44 vorgesehen, die mit einem zur Scheibenebene parallellaufenden Schenkel 45 in die Stufe der zugeordneten Außenscheibe 3 eingreifen. Das Halteprofil 44 wird durch nicht dargestellte Schrauben mit einem Außenprofil 46 eines wärmegedämmten Rahmenprofils 47a verschraubt, das über eine Dichtung 48 sich an der Innenscheibe 2 der Isolierglasscheibe 1 abstützt.

Das Halteprofil 44 wird außerhalb seines Befestigungsbereichs von einer Dichtung 46 umschlossen, die durch Rastvorsprünge 47 festgelegt wird, die in Rastaussparungen des Halteprofils eingefedert werden.

### Bezugszeichen

- 1: Isolierglasscheibe
- 2: Innenscheibe
- 3: Außenscheibe
- 4: Abstandhalteprofil
- 5: Klebeschicht
- 6: Glasplatte
- 7: Glasplatte
- 8: Klebefolie
- 9: Stufe
- 10: Randfläche
- 11: Dichtungsleiste
- 12: Befestigungsfuß
- 13: Verankerungsnut
- 14: Pfostenprofil
- 15: Sprossenprofil
- 16: Verankerungsnut
- 17: Dichtungsleiste
- 18: Schraubnut
- 19: Schraubnut
- 20: Haltesteg
- 21: Wandsteg
- 22: Rinne
- 23: Randsteg
- 24: Leiste
- 25: Rinne
- 26: Verankerungsnut
- 27: Randsteg
- 28: Halteprofil
- 29: Senkkopf
- 30: Befestigungsschraube
- 31: Nutboden
- 32: Dichtung
- 33: Deckel
- 34: Rastvorsprung
- 35: Querschnitt
- 36: Senkkopfschraube
- 37: Dichtung
- 38: Deckel
- 39: Rastvorsprung
- 40: Rastaussparung
- 41: Querschnitt
- 42: Lappen
- 43: Fuge
- 44: Halteprofil
- 45: Schenkel
- 46: Außenprofil
- 47: Rahmenprofil
- 48: Dichtung

## Patentansprüche

1. Befestigung für Isolierglasscheiben einer Außenwand- oder Dachverglasung, die von einer aus Profilschienen gebildeten Tragkonstruktion gehalten ist, an der die aus in Abstand voneinander angeordneten Scheiben bestehenden Isolierglasscheiben durch Haltemittel formschlüssig festgelegt sind, wobei die Außenscheibe jeder Isolierglasscheibe eine von der jeweiligen seitlichen Randfläche beginnende Ausnehmung aufweist und die einander zugewandten Ausnehmungsflächen benachbarter, eine Fassadenfuge begrenzender Isolierschieben miteinander fluchten und in die Ausnehmung der Isolierglasscheiben Flansche der Haltemittel eingreifen, die in der Ausnehmung in Dichtungsmasse eingebettet sind, **dadurch gekennzeichnet,** daß die Außenscheibe (3) einer jeden Isolierglasscheibe (1) eine umlaufende, von der jeweiligen seitlichen Randfläche beginnende Stufe (9) aufweist und in die Stufe eingreifende Flanschleisten eines oder mehrerer Halteprofile (28,35,44) von einer als Dichtungshohlkörper ausgebildeten Dichtung (32,37,46) umschlossen sind, die die Befestigungsschrauben (30,36) außen abdeckt und zusammen mit den Flanschleisten den Stufenraum ausfüllt, wobei die Außenfläche der Dichtung (32,37,46) und die Außenflächen der Isolierglasscheiben (1) eine gemeinsame Ebene bilden, und daß die Dichtung (32,37, 46) teilweise einen von Dichtungsmasse freien Falzraum der Isolierverglasung begrenzt.

2. Befestigung nach Anspruch 1, dadurch gekennzeichnet, daß die umlaufende Stufe (9) der Außenscheibe (3) den umlaufenden Außenrand der Innenscheibe (2) jeder Isolierglasscheibe (1) überragt.

3. Befestigung nach Anspruch 1 oder 2, dadurch gekennzeichnet, daß die Außenscheibe (3) jeder Isolierglasscheibe (1) aus zwei mittels einer durchsichtigen Klebefolie (8) oder mittels eines durchsichtigen Gießharzes verbundenen Glasplatten (6,7) besteht, von denen die äußere umlaufend kleiner ist als die innenliegende und die äußere Glasplatte (6) zusammen mit der Dicke der Klebefolie (8) bzw. der Gießharzschicht die Höhe und der die äußere Glasplatte (6) überragende Randbereich der innenliegenden Glasplatte (7) die Breite der Stufe (9) bestimmt.

4. Befestigung nach Anspruch 1, dadurch gekennzeichnet, daß die Außenscheibe (3) als Dickglasscheibe ausgebildet und der umlaufende Rand mit einer eingeschliffenen oder eingeformten Stufe (9) versehene ist.

5. Befestigung nach Anspruch 1, dadurch gekennzeichnet, daß das in die Fassaden- oder Dachfuge eingelegte, sich an den Stufen (9) der die Fuge begrenzenden Isolierglasscheiben (1) abstützende Halteprofile mit der Tragkonstruktion verschraubt und von einer Dichtung (32,37) umschlossen ist.

6. Befestigung nach Anspruch 5, dadurch gekennzeichnet, daß die Dichtung (32) einen sich über die gesamte Fuge erstreckenden Deckel (33) aufweist, der an der Unterseite mit mindestens einem in eine Rastaussparung einfederbaren Rastvorsprung (34) versehen ist.

7. Befestigung nach Anspruch 6, dadurch gekennzeichnet, daß die Dichtung (32) sich über die gesamte gestufte Stirnfläche der Außenscheibe erstreckt und an der der Tragkonstruktion zugewandten Seite einen geschwächten Querschnitt (35) aufweist.

8. Befestigung nach einem der vorhergehenden Ansprüche, dadurch gekennzeichnet, daß das Halteprofil (28,35,44) aus Metall, vorzugsweise aus Aluminium gefertigt ist.

9. Befestigung nach Anspruch 5, dadurch gekennzeichnet, daß die Dichtung aus Silikon besteht.

10. Befestigung nach Anspruch 8, dadurch gekennzeichnet, daß das Halteprofil (28) eine der Senkkopfkontur der Befestigungsschrauben entsprechende trapezförmige Nut aufweist, deren Nutboden (31) mit Durchstecklöchern für die Schraubenschäfte ausgerüstet ist.

11. Befestigung nach Anspruch 8, dadurch gekennzeichnet, daß das Halteprofil (35) im Querschnitt rechteckförmig ausgebildet ist und Senkkopfbohrungen für die Befestigungsschrauben aufweist.

12. Befestigung nach Anspruch 1, dadurch gekennzeichnet, daß in jeder Fuge (43) zwei L-förmig ausgebildete Halteprofile (44) vorgesehen sind, die mit einem zur Scheibenebene parallelaufenden Schenkel (45) in die zugeordnete Stufe (9) der Außenscheibe (3) eingreifen, das Halteprofil mit einem Metallaußenprofil (46) eines wärmegedämmten Rahmens der Isolierglasscheibe (1) verschraubt und außerhalb des Befestigungsbereiches von einer Dichtung (46) umschlossen ist.

13. Befestigung nach einem der vorhergehenden Ansprüche, dadurch gekennzeichnet, daß die Tragkonstruktion aus Pfosten- (14) und Sprossenprofilen (15) besteht, die mittig mit einer Schraubnut (18,19) und an den Längsrändern mit Verankerungsnuten (13,16) für Dichtungsleisten (11,17) ausgestattet sind, auf denen die Isolierglasscheiben (1) aufliegen, wobei die Verankerungsnuten und die Schraubennuten Rinnen (22, 25) für Sickerwasser begrenzen und daß im Stoßbereich zwischen Pfostenprofil (14) und Sprossenprofil (15) die Böden (26) der Rinnen für Sickerwasser des Sprossenprofils auf den Randstegen (27) der Verankerungsnut (13) des Pfostenprofils (14) aufliegen.

14. Befestigung nach Anspruch 13, dadurch gekennzeichnet, daß die Bauhöhe der Dichtungsleisten (17) der Sprossenprofile (15) kleiner ist als die Bauhöhe der Dichtungsleisten (11) der Pfostenprofile (14).

## Claims

1. A fixing for insulating glass panes of an external wall or roof glazing arrangement held by a support structure which is formed from profile bars and to which the insulating glass panes comprising panes arranged at a spacing from each other are positively lockingly secured by holding means, wherein the outer pane of each insulating glass pane has an opening beginning from the respective lateral edge surface and the mutually facing surfaces of the openings of adjacent insulating panes which define a facade join are aligned with each other and engaging into the opening in the insulating glass panes are flanges of the holding means which are embedded in the opening in sealing material, characterised in that the outer pane (3) of each insulating glass pane (1) has a step (9) which extends therearound and which begins from the respective lateral edge surface and flange bars, which engage into the step, of one or more holding profile members (28,35, 44) are enclosed by a seal (32, 37, 46) which is in the form of a hollow sealing body and which externally covers over the fixing screws (30, 36) and which together with the flange bars fills the step space, wherein the outside surface of the seal (32, 37, 46) and the outside surfaces of the insulating glass panes (1) form a common plane, and that the seal (32, 37, 46) partially defines a rabbet space of the insulating glazing arrangement, said space being free of sealing material.

2. A fixing according to claim 1 characterised in that the step (9) extending around the outer pane (3) projects beyond the peripherally extending outer edge of the inner pane (2) of each insulating glass pane (1).

3. A fixing according to claim 1 or claim 2 characterised in that the outer pane (3) of each insulating glass pane (1) comprises two glass plates (6, 7), which are joined by means of a transparent adhesive foil (8) or by means of a transparent casting resin and of which the outer glass plate is peripherally smaller than the inwardly disposed glass plate and the outer glass plate (6) together with the thickness of the adhesive foil (8) or the casting resin layer determines the height of the step (9) and the edge region of the inwardly disposed glass plate (7), which projects beyond the outer glass plate (6), determines the width of the step (9).

4. A fixing according to claim 1 characterised in that the outer pane (3) is in the form of a thick glass pane and the peripheral edge is provided with a step (9) which is ground or formed therein.

5. A fixing according to claim 1 characterised in that the holding profile member which is inserted into the facade or roof join and which bears against the steps (9) of the insulating glass panes (1) delimiting the join is screwed to the support structure and enclosed by a seal (32, 37).

6. A fixing according to claim 5 characterised in that the seal (32) has a cover (33) which extends over the entire join and which is provided at the underside with at least one retaining projection (34) which can be engaged by a spring action into a retaining recess.

7. A fixing according to claim 6 characterised in that the seal (32) extends over the entire stepped end face of the outer pane and has a weakened cross-section (35) at the side towards the support structure.

8. A fixing according to one of the preceding claims characterised in that the holding profile member (28, 35, 44) is made from metal, preferably aluminium.

9. A fixing according to claim 5 characterised in that the seal comprises silicone.

10. A fixing according to claim 8 characterised in that the holding profile (28) has a trapezoidal groove which corresponds to the contour of the countersink head of the fixing screws and the bottom (31) of which is provided with holes for the screw shanks to pass therethrough.

11. A fixing according to claim 8 characterised in that the holding profile member (35) is of rectangular configuration in cross-section and has countersink bores for the fixing screws.

12. A fixing according to claim 1 characterised in that provided in each join (43) are two holding profile members (44) which are of an L-shaped configuration and which engage by a limb (45) extending parallel to the pane plane into the associated step (9) of the outer pane (3), the holding profile member is screwed to an outer metal profile member (46) of a heat-insulated frame of the insulating glass pane (1) and is enclosed outside the fixing region by a seal (46).

13. A fixing according to one of the preceding claims characterised in that the support structure comprises upright profile members (14) and crossbar profile members (15) which are centrally provided with a screw groove (18, 19) and at the longitudinal edges with anchoring grooves (13, 16) for sealing strips (11, 17) on which the insulating glass panes (1) lie, wherein the anchoring grooves and the screw grooves define channels (22, 25) for seepage water and that in the junction region between an upright profile member (14) and a crossbar profile member (15) the bottoms (26) of the channels for seepage water of the crossbar profile member bear against the edge limb portions (27) of the anchoring groove (13) of the upright profile member (14).

14. A fixing according to claim 13 characterised in that the structural height of the sealing strips (17) of the crossbar profile members (15) is smaller than that of the sealing strips (11) of the upright profile members (14).

## Revendications

1. Fixation pour vitres isolantes d'un vitrage de mur extérieur ou de toiture, maintenue par une construction support, formée en glissières profilées à laquelle les vitres isolantes formées de vitres disposées à distance l'une de l'autre, sont fixées avec ajustement de forme à l'aide de moyens de maintien, la vitre extérieure de chaque vitre isolante présentant un évidement, commençant depuis la surface marginale latérale respective et les surfaces d'évidement, tournées l'une vers l'autre, de vitres isolantes voisines, délimitant un joint de façade, étant placées en alignement et engageant dans l'évidement de la vitre isolante des rebords des moyens de maintien, qui sont noyés dans de la masse d'étanchéité dans l'évidement, caractérisée en ce que la vitre extérieure (3) de chaque vitre isolante (1) présente un étagement (9) de pourtour, commençant depuis la surface marginale latérale respective, et des bandes de rebords, s'engageant dans l'étagement, d'un ou plusieurs profilés de maintien (28, 37, 46), sont entourées par un joint d'étanchéité (32, 37, 46), réalisé sous forme d'un corps creux d'étanchéité et recouvrent les vis de fixation (30, 36) extérieurement et remplissent l'espace de l'étagement, conjointement avec les bandes de rebord, la surface extérieure du joint d'étanchéité (32, 37, 46) et les surfaces extérieures des vitres isolantes (1) formant un plan commun, et en ce que le joint d'étanchéité (32, 37, 46) délimite partiellement un espace de feuillure du vitrage isolant, exempt de masse d'étanchéité.

2. Fixation selon la revendication 1, caractérisée en ce que l'étagement de pourtour (9) de la vitre extérieure (3) dépasse du bord extérieur de pourtour de la vitre intérieure (2) de chaque vitre isolante (1).

3. Fixation selon la revendication 1 ou 2, caractérisée en ce que la vitre extérieure (3) de chaque vitre isolante (1) est composée de deux panneaux en verre (6, 7), reliés au moyen d'une feuille adhésive (8) translucide ou au moyen d'une résine de coulée translucide, panneaux en verre tel que celui de l'extérieur est d'un pourtour plus petit que celui de l'intérieur et le panneau en verre extérieur (6) déterminant, conjointement avec l'épaisseur de la feuille adhésive (8) ou la couche de résine dc coulée, la hauteur de l'étagement (9) et la zone marginale dépassant du panneau en verre extérieur (6), du panneau en verre intérieur (7), déterminant la largeur de l'étagement (9).

4. Fixation selon la revendication 1, caractérisée en ce que la vitre extérieure (3) est réalisée sous forme de vitre à verre épais et la bordure de pourtour est pourvue d'un étagement (9) travaillé intérieurement par meulage ou creusé par formage.

5. Fixation selon la revendication 1, caractérisée en ce que le profilé de maintien, inséré dans le joint de façade ou de toiture et prenant appui sur les étagements (9) des vitres isolantes (1) délimitant le joint, est vissé à la construction support et entouré d'un joint d'étanchéité (32, 37).

6. Fixation selon la revendication 5, caractérisée en ce que le joint d'étanchéité (32) présente un couvercle (33), s'étendant sur la totalité du joint et pourvu en face inférieure d'au moins une saillie d'encliquetage (34) susceptible de s'introduire élastiquement dans un évidement d'encliquetage.

7. Fixation selon la revendication 6, caractérisée en ce que le joint d'étanchéité (32) s'étend sur la totalité de la surface frontale étagée de la vitre extérieure et présente sur la face tournée vers la construction support une section transversale (35) affaiblie.

8. Fixation l'une des revendications précédentes, caractérisé en ce que le profilé de maintien (28, 35, 44) est fabriqué en métal, de préférence en aluminium.

9. Fixation selon la revendication 5, caractérisé en ce que le joint d'étanchéité est en silicone.

10. Fixation selon la revendication 8, caractérisée en ce que le profilé de maintien (28) présente une rainure trapézoïdale, correspondant au contour de tête noyée des vis de fixation, rainure dont le fond (31) est équipé de trous d'enfichage pour les fûts de vis.

11. Fixation selon la revendication 8, caractérisée en ce que le profilé de maintien (35) est réalisé avec une section transversale rectangulaire et présente des lamages, destinés aux vis de fixation.

12. Fixation selon la revendication 1, caractérisée en ce que, dans chaque joint (43), sont prévus deux profilés de maintien (44) réalisés en forme de L, s'engageant par une branche (45) parallèle au plan de la vitre, dans l'étagement (9) associé de la vitre extérieure (3), le profilé de maintien étant vissé à un profilé extérieur métallique (46) d'un cadre isolé thermiquement de la vitre isolante (1) et entouré par un joint d'étanchéité (46), à l'extérieur de la zone de fixation.

13. Fixation selon l'une des revendications précédentes, caractérisée en ce que la construction support est composée de profilés de poteaux (14) et de profils de meneaux (15), équipés au centre d'une rainure de vissage (18, 19) et, sur les bords longitudinaux, de rainures d'ancrage (13, 16), destinées à des bandes d'étanchéité (11, 17), sur lesquelles les vis isolantes (1) reposent, les rainures d'ancrage et les rainures de vissage délimitant des goulottes (22, 25) pour l'eau de ruissellement et en ce que, dans la zone de joint entre profilé de poteaux (14) et profilé de meneaux (15), les fonds des goulottes destinés à l'eau de ruissellement du profilé de meneau reposent sur les nervures marginales (27) de la rainure d'ancrage (13) du profilé de poteau (14).

14. Fixation selon la revendication 13, caractérisée en ce que la hauteur de construction des bandes d'étanchéité (17) des profilés de meneaux (15) est inférieure à la hauteur de construction des bandes d'étanchéité (11) des profilés de meneaux (14).
